# EUROPEAN PATENT SPECIFICATION

(11) **EP 2 852 505 B1**
(45) Date of publication and mention of the grant of the patent: **19.07.2017**
(21) Application number: 13793339.6
(22) Date of filing: 15.05.2013
(51) Int. Cl.: B60K 15/035, F16K 17/36, F16K 24/04

(54) **VENT VALVE**
LÜFTUNGSVENTIL
SOUPAPE-ÉVENT

(30) Priority: 23.05.2012 SE 1250527
(43) Date of publication of application: 01.04.2015
(73) Proprietor: Scania CV AB, 151 87 Södertälje (SE)
(72) Inventor: HARNEMO, Björn, S-151 32 Södertälje (SE); KÄLD, Ricard, S-152 54 Södertälje (SE)
(74) Representative: Scania CV AB
(86) International application number: PCT/SE2013/050550
(87) International publication number: WO 2013/176602

(56) References cited:
- WO-A2-2005/047082
- GB-A- 2 319 516
- US-A- 4 679 581
- US-A- 5 613 513
- US-A- 5 934 306
- US-A1- 2005 161 085

## Description

### TECHNICAL FIELD OF THE INVENTION

The present invention concerns a vent valve for, for example, fuel tanks and similar containers in connection with which it is necessary to achieve pressure equalization between the volume of the tank/container and its surroundings. The invention is primarily intended to be used with tanks/containers intended for heavy commercial vehicles such as goods vehicles and buses, but it can also be used on other types of vehicles, such as cars, construction machinery, aircraft, vessels etc that are equipped with some type of container whose interior volume must be pressure-equalized with the surroundings. The invention also concerns a vehicle equipped with a vent valve according to the invention.

### BACKGROUND OF THE PRIOR ART

Vehicles are normally equipped with at least one fuel tank arranged in the frame of the vehicle and intended for the storage/containment of a fuel such as gasoline or diesel fuel that is used to propel the vehicle. To avoid the buildup of pressure inside the fuel tank, its interior volume must communicate with the surroundings so that a necessary pressure equalization can be achieved and air or gas can pass out of the tank when it is being filled with fuel, and so that ambient air can gradually pass into the tank as the fuel is consumed during operation.

At the same time, the connection between the interior of the fuel tank and its surroundings cannot lead to fuel being able to leak out of the fuel tank. This is a particularly notable problem if the vehicle is driven on an uneven road or an uneven surface and begins to rock, which will cause the fuel to slosh in the fuel tank. An even bigger problem arises if the vehicle is involved in an accident and overturns. This can result in significant amounts of fuel running out of the tank and polluting the environment, or in a risk of explosion or a risk of fire occurring.

Some form of non-return valve, a so-called vent valve, is commonly used at present to minimize the risk of fuel leaking from the fuel tank. Such a valve is arranged in a suitable location near the upper part of the fuel tank and can then, for example, be connected to a tube or hose that discharges in a suitable location beneath the vehicle.

One common problem with known vent valves is that they regularly leak small amounts of fuel due to deficiencies and weaknesses in the valve design. These deficiencies result, among other things, in the valve failing to close effectively enough when fuel intermittently reaches up to the valve on the inside of the fuel tank. It is particularly difficult to create a valve that reacts with sufficient speed to sloshing, which involves very rapid and short-term level changes in the tank. As a result of inertias in known designs combined with overly small or incorrectly disposed floats in these systems, it is very difficult to achieve a rapid and effective closure of the valve. In operating cases that involve a great deal of sloshing in the fuel tank, the leakage quickly increases to an unacceptable level. Many attempts have been made to solve these problems, leading to various temporary solutions with dubious results. Known vent valves are also expensive to fabricate and often need, for the foregoing reasons, to be maintained, repaired or replaced. This is uneconomical, particularly because each fuel tank can be equipped with a plurality of vent valves.

Previous attempts have thus been made to solve said problems and propose a design that reduces the problems with leakage.

One such design is described in US6719000**,** which describes a vent valve commonly available on the market. This vent valve is equipped with a metal valve body in which a float is slidably arranged. When the liquid level in the take increases, the float begins to rise, and when it has moved high enough in the tank, the valve closes. The valve is also designed in such a way that, with the help of a metal ball placed under the float, and given the conformation of the valve body with tilted bottom surfaces, the valve will close if the vehicle rocks and the valve assumes a lateral position, for example, if it is rotated 90 degrees in either direction.

The disadvantages of known solutions are that they react far too slowly to intermittent level increases in the tank, such as slosh. One reason for this is that the float is disposed inside the valve body, with the result that the float has a limited volume, which results in a limited buoyant force.

The prior art describes no vent valve that anticipates the present invention and contributes in an effective, functional and cost-effective manner to ensuring that as little fuel as possible leaks from the fuel tank in connection with various conceivable operating cases.

GB2319516 discloses a vent valve for a fuel tank according to the preamble of claim 1 with varying volume of the float. the float is arranged to absorb fuel from the tank. As the float is filled with fuel, its volume decreases.

WO2005/047082 discloses a vent valve for a second reservoir of oil for a steering servo. A float is arranged outside and below the valve body.

### SUMMARY OF THE INVENTION

The object of the invention is to solve the aforesaid problems and describe a vent valve intended for a fuel tank that effectively, quickly and reliably prevents leakage of liquid/fuel from the tank/container via the vent valve, regardless of the operating case or the orientation position of the vent valve.

Another object of the invention is to enable the vent valve float to be designed with a large enough volume to ensure a sufficient lifting force to achieve a fast and effective seal.

Another object of the invention is to enable the vent valve float to be arranged so as to slide up and down in the axial direction on the outside of the valve body in order to achieve a faster and more effective closure of the valve.

Another object of the invention is to enable a valve ball of metal/steel to be used to achieve as secure and maintenance-free seal as possible, and to make the valve more robust in that a steel ball will not rise as easily as a plastic ball in connection with heavy airflows and thus cause an undesired closure of the valve, for example during fueling.

Another object of the invention is that the vent valve according to the invention be simple to install, so that fabrication can be performed simply and quickly, and thus be cost-effective.

Another object of the invention is that the vent valve be simple and functional in terms of its design, and consist of as few parts as possible.

Another object of the invention is that the component parts must be of low weight and easy and inexpensive to fabricate.

These and further objects and advantages are achieved according to the invention by a device defined by the features specified in the characterizing part of independent claim 1.

As noted, the invention is intended primarily for heavy commercial vehicles such as goods vehicles, buses and the like, but it can naturally also be used for other types of vehicles that are equipped with some type of tank or container that needs to be pressure-equalized in relation to the surroundings.

One important object of the invention is that the vent valve must react quickly to intermittent level changes in the tank, such as, for example, in connection with slosh, and to then close rapidly in order to prevent or minimize leakage of liquid from the tank.

The invention is achieved mainly in that its float, which is made of, for example, plastic or the like, is designed with a central and, in cross section, essentially circular recess that extends through it in its axial direction and enables the float to slide outside of the valve body. In this way a float of greater volume can be used, with the result that the float acquires a greater buoyant capacity and can thus exert a greater lifting force, which in turn makes it possible, for example, to use a steel ball, which can be pressed against the sealing seat of the valve with greater precision. A more effective seal is thereby achieved that minimizes or prevents the leakage of liquid or fuel through the valve.

The solution according to the invention thus entails that even a slosh, i.e. an intermittent/temporary increase in the fuel level in the tank, will cause the vent valve to react rapidly and close, thereby preventing leakage in a more effective manner than in known vent valves. A vent valve that can react quickly enough to a slosh and that minimizes fuel leakage offers a marked quality increase with regard to a long-known problem, and offers significant cost savings in terms of remedying or repairing existing fuel tank installations that require constant maintenance. The solution according to the invention requires no extensive changes in the designs of existing tanks, with the result that it is easy and thus inexpensive to implement the new solution in connection with the manufacture of new vehicles. The solution according to the invention also makes it possible to upgrade already manufactured vehicles easily.

Additional features and advantages of the invention are presented in the following more detailed description of the invention below, and in the accompanying drawings and other claims.

### BRIEF SUMMARY OF DRAWINGS

The invention is described in greater detail below in several preferred embodiments, based on the accompanying drawings.
**Figure 1** shows an oblique perspective view from the side of a vent valve according to the invention.
**Figure 2** shows the same design as is shown in Figure 1, but here the parts of the vent valve are separated somewhat in the axial direction in order to show these moving parts more clearly.
**Figure 3** shows, obliquely from the side, a vertical section through the vent valve according to the invention, as viewed obliquely from the side, where the relative positions of the moving parts of the vent valve are shown.
**Figures 4 and 5** show, directly from the side and in cross section, two different function positions of the vent valve, with Figure 4 showing the vent valve in its open position and
Figure 5 its closed position, i.e. when the liquid in a conceived tank has reached a certain level.
**Figures 6 and 7** show the vent valve according to the invention in two different placement positions, with Figure 6 showing the valve in a conceived tipped position of 90 degrees, i.e. a conceived vehicle with a tank that has tipped and is lying on its side, and with Figure 7 showing the valve in a conceived tip position of 180 degrees, i.e. a conceived vehicle and tank that have rolled and are now upside down.

### DESCRIPTION OF PREFERRED EMBODIMENTS

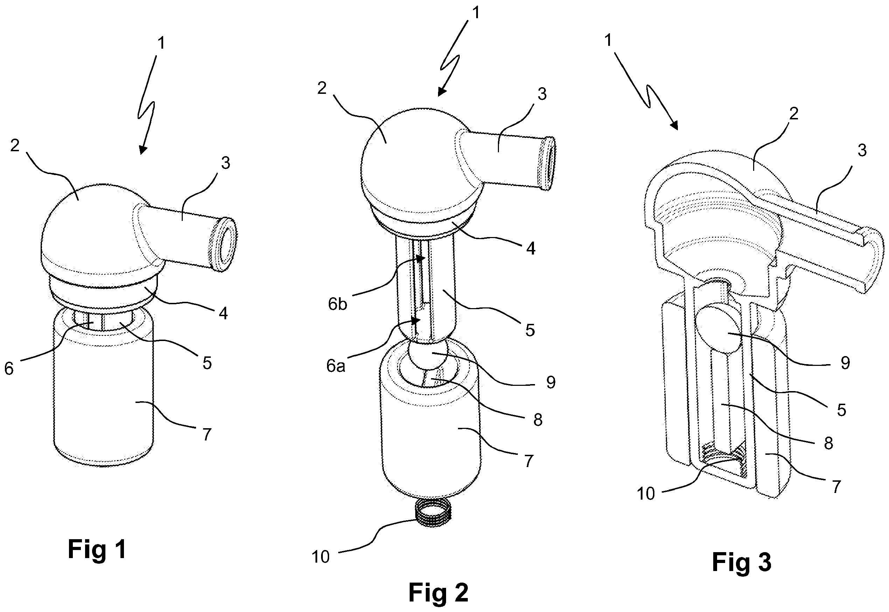

**Figure 1** shows an oblique perspective view, from the side, of a vent valve 1 according to the invention. The vent valve 1 consists of an integrated unit that comprises, at its top, an essentially hollow valve cover 2, preferably made of a suitable plastic or metal and provided with a hose connector 3 for mounting a rubber hose, tube or the like (not shown) intended to let air flow out or let ambient air flow in. The valve cover 2 is also equipped, at the bottom, with a threaded section 4 by means of which the vent valve 1 can be screwed securely into a threaded holder arranged, for example, in the upper part of a fuel tank (not shown) or similar container intended to contain a liquid/fluid. The vent valve 1 further consists of an extended valve body 5, preferably made of metal and equipped with at least one vertical recess 6 or groove that extends into the wall of the valve body in the axial direction of the vent valve 1. Outside the valve body 5 there is arranged a circular float 7 that can move, i.e. slide, to a limited extent up and down along the outside of the valve body 5. The float 7 is suitably made of a material with low density and/or can consist of an essentially hollow or foam-filled body to achieve a good buoyant/lifting force. The float 7 in the embodiment described here is essentially tubular or cylindrical.

**Figure 2** shows the vent valve 1 according to the invention according to Figure 1, but with its component parts separated somewhat in order to show the design more clearly. The valve body 5 here is equipped with two recesses 6a,b disposed centrally in relation to one another in the wall of the valve body 5. An actuating element 8 that is an integral part of or mechanically connected to the float 7 runs in the recesses 6a,b, which extend in the axial direction of the valve body 5. The actuating element 8 is arranged so as to extend entirely or partly into the interior space in the valve body 5 and can thus mechanically actuate/displace a valve ball 9. Because the size of the float 7 is not limited by the interior space of the valve body 5, the float 7 can be designed with a greater volume that would otherwise be possible, which results in an increased buoyant force, which in turn makes it possible to use a valve ball 9 with a density that is higher, or much higher, than the density of the liquid in the tank in order to prevent heavy airflows through the vent valve from causing an undesired closure of the vent valve 1. The valve ball 9 is preferably made of a metal such as, for example, steel.

When the liquid level around the vent valve 1 reaches a certain level (not shown), the float 7 is caused to move upward toward the valve cover 2, which results in the actuating element 8 also moving upward inside the valve body 5 and displacing the valve ball 9 arranged therein. A spring 10 is arranged in the bottom of the valve body 5 beneath the actuating element 8 of the float 7.

**Figure 3** shows, obliquely from the side, a vertical section through the vent valve 1 according to the invention, wherein the relative placements of the various moving parts of the vent valve 1 are shown in greater detail and in their correct placement locations. In this figure the liquid does not reach up to the float 7, and the float 7 and the valve ball 9 assume their lower end positions against the action of the spring 10.

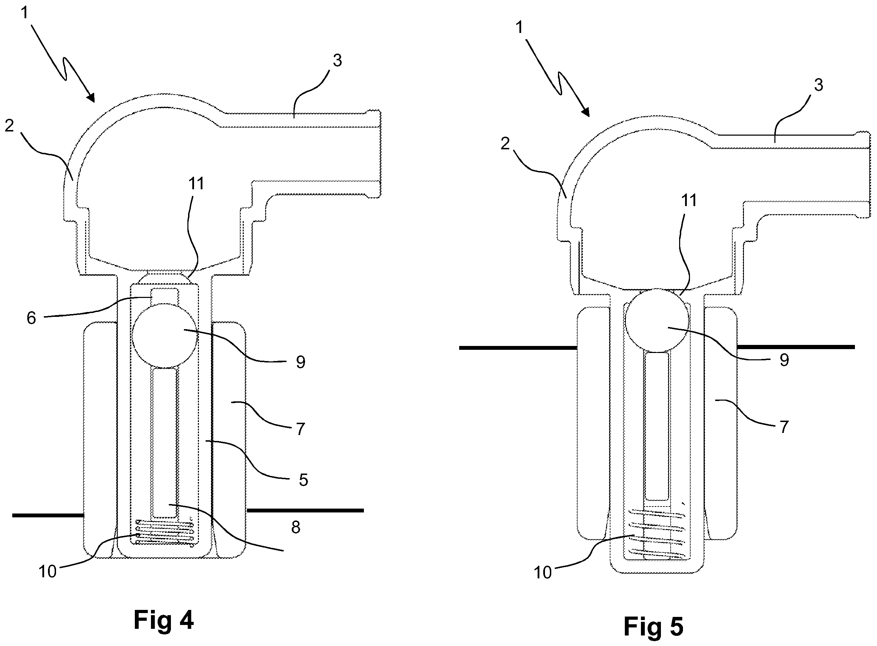

**Figure 4** shows, directly from the side, a first function position for the vent valve 1 in which the liquid in the conceived tank does not reach up high enough to actuate/lift the float 7 and the vent valve 1 is in its entirely open position, so that air can pass out of or into the tank. Here the valve ball 9 rests on the actuating element 8 of the float 7, which in turn rests on the spring 10, which is compressed by the combined weight of the valve ball 9 and the float 7.

**Figure 5** shows, in principle, the same depiction as is shown in Figure 4, but here the vent valve 1 is in a second function position wherein the liquid in the conceived tank reaches up high enough to actuate/lift the float 7. Here the valve ball 9 is in its upper end position and is being pressed upward by the actuating element 8 of the float, with some assistance from the spring 10, toward a sealing valve seat 11, and the vent valve 1 has closed completely, so that air can no longer pass out through the vent valve 1. The valve seat 11 can be equipped with a separate part in the form of a seal that is preferably soft (not shown in detail in the figure), but can also consist solely of a ground circular surface or lip.

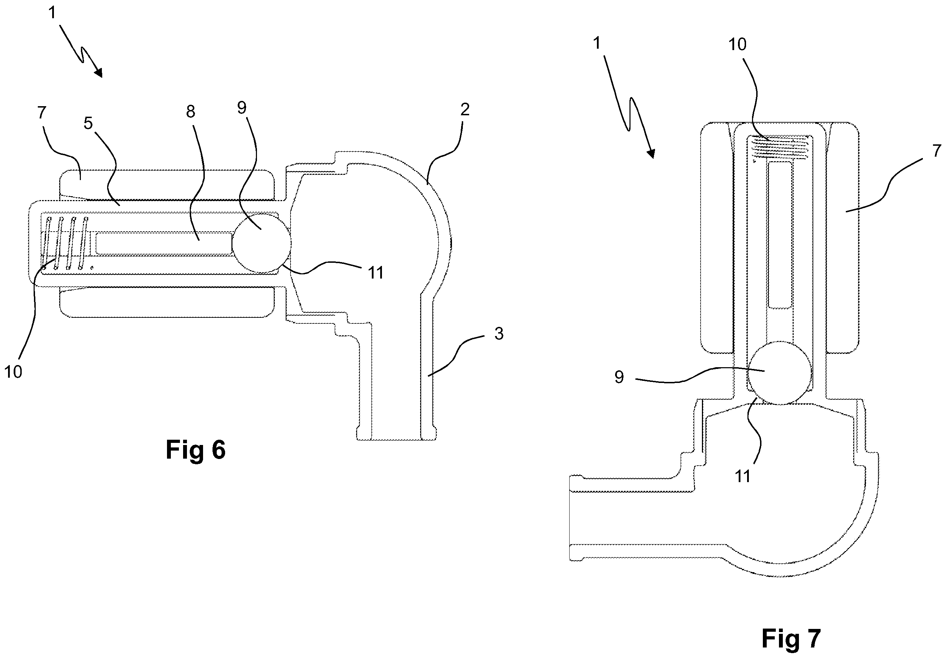

**Figure 6** shows the vent valve 1 according to the invention, but here it is placed in a conceived first alternative placement position wherein the vent valve 1 finds itself in a position that is 90 degrees from its normal position, i.e. the vehicle/tank can be thought to have tipped and is lying on its side. In this position the spring 10 presses the actuating element 8, the float 7 and the valve ball 9 against the valve seat 11, and air can no longer pass out through the vent valve 1.

**Figure 7** shows the vent valve 1 according to the invention in yet another conceivable alternative placement location, wherein the tank/vehicle and the vent valve 1 are in a position 180 degrees from their normal position, i.e. the vehicle/tank can be thought to have rolled and is lying upside down. The float 7 is lifted by the liquid in the tank and assumes its first end position against the action of the spring 10, and in this position does not act upon the valve ball 9. Conversely, the valve ball 9 is caused to fall by the force of gravity and assumes its second sealing end position against the valve seat 11, and liquid cannot leak out through the vent valve 1. The fluid pressure also contributes to holding the valve ball 9 securely in place in this closed position.

One advantage of the invention is that the size of the float 7 is not limited by an inability to float upward when tipped 90-180 degrees, as the valve ball 9 in the present invention is disposed outside the float 7 (in the normal operating position of the vent valve 1) rather than on its underside as described in the aforementioned known vent valve according to US6719000**.** The description above is intended primarily to facilitate an understanding of the invention and is naturally not limited to the embodiments presented, but rather other variants of the invention are possible and conceivable within the framework of the inventive idea and the protective scope of the following claims.

## Claims

1. A vent valve (1) intended for, for example, fuel tanks or similar containers in connection with which it is necessary to achieve pressure equalization between the interior space of the tank/container and its surroundings, comprising a valve body (2), a valve ball (9) and a float (7),
**characterized in that**
the float (7) is cylindrical and arranged so as to slide up and down in the axial direction on the outside of the valve body (5), which float 7 is further integrated in/mechanically connected to an actuating element (8), which actuating element (8) is arranged so as to extend entirely or partly into the interior space of the valve body (5) and thereby mechanically act upon/displace the valve ball (9).

2. A vent valve (1) according to claim 1,
**characterized in that**
the valve ball (9) is made of a material with a density that is higher, or much higher, than the density of the liquid in the tank in order to prevent heavy airflows through the vent valve (1) from causing an undesired closure of the vent valve (1).

3. A vent valve (1) according to any of the preceding claims,
**characterized in that**
the valve ball (9) is made of a metal, for example steel.

## Patentansprüche

1. Entlüftungsventil (1), das z. B. für Kraftstofftanks oder ähnliche Behälter vorgesehen ist, bei denen es erforderlich ist, einen Druckausgleich zwischen dem Innenraum des Tanks/Behälters und dessen Umgebung zu erreichen, mit einem Ventilkörper (2), einer Ventilkugel (9) und einem Schwimmer (7),
**dadurch gekennzeichnet, dass**
der Schwimmer (7) zylindrisch ist und so angeordnet ist, dass er in axialer Richtung an der Außenseite des Ventilkörpers (5) aufwärts und abwärts gleitet, wobei der Schwimmer (7) ferner in einem Betätigungselement (8) integriert bzw. mit diesem mechanisch verbunden ist, wobei dieses Betätigungselement (8) so angeordnet ist, dass es sich ganz oder teilweise in den Innenraum des Ventilkörpers (5) erstreckt und dabei mechanisch auf die Ventilkugel (9) wirkt bzw. diese verschiebt.

2. Entlüftungsventil (1) nach Anspruch 1,
**dadurch gekennzeichnet, dass**
die Ventilkugel (9) aus einem Material mit einer Dichte besteht, die größer oder viel größer ist als die Dichte der Flüssigkeit im Tank ist, um zu verhindern, dass starke Luftströme durch das Entlüftungsventil (1) ein unerwünschtes Schließen des Entlüftungsventils (1) verursachen.

3. Entlüftungsventil (1) nach einem der vorigen Ansprüche,
**dadurch gekennzeichnet, dass**
die Ventilkugel (9) aus einem Metall, z. B. Stahl, besteht.

## Revendications

1. Soupape évent (1) conçue, par exemple, pour des réservoirs de carburant ou des récipients similaires vis-à-vis desquels il est nécessaire de réaliser une égalisation de pression entre l'espace intérieur du réservoir/récipient et son environnement, comprenant un corps de soupape (2), une bille de soupape (9) et un flotteur (7),
**caractérisée en ce que**
le flotteur (7) est cylindrique et agencé de façon à coulisser vers le haut et vers le bas dans la direction axiale sur l'extérieur du corps de soupape (5), lequel flotteur (7) est de plus intégré dans/mécaniquement relié à un élément d'actionnement (8), lequel élément d'actionnement (8) est agencé de façon à s'étendre entièrement ou partiellement dans l'espace intérieur du corps de soupape (5), et, par conséquent, à agir mécaniquement sur/déplacer la bille de soupape (9).

2. Soupape évent (1) selon la revendication 1,
**caractérisée en ce que**
la bille de soupape (9) est réalisée en un matériau avec une densité qui est supérieure, ou très supérieure, à la densité du liquide dans le réservoir de façon à empêcher des courants d'air lourds à travers la soupape évent (1) de provoquer une fermeture indésirable de la soupape évent (1).

3. Soupape évent (1) selon l'une quelconque des revendications précédentes,
**caractérisée en ce que** :
la bille de soupape (9) est réalisée en un métal, par exemple en acier.
